# FASCICULE DE BREVET EUROPEEN

(11) **EP 3 354 571 B1**
(45) Date de publication et mention de la délivrance du brevet: **28.10.2020**
(21) Numéro de dépôt: 17189545.1
(22) Date de dépôt: 06.09.2017
(51) Int. Cl.: B64D 11/06, B60N 2/42, B60N 2/427, B60N 2/68

(54) **SIÈGE D'AÉRONEF MUNI D'UNE ZONE D'ABSORPTION D'ÉNERGIE INTÉGRÉE DANS LE BAQUET**
LUFTFAHRZEUGSITZ, DER MIT EINER IN DIE SITZWANNE INTEGRIERTEN ENERGIEABSORPTIONSZONE AUSGESTATTET IST
AIRCRAFT SEAT PROVIDED WITH AN ENERGY-ABSORPTION AREA INTEGRATED INTO THE BUCKET

(30) Priorité: 08.09.2016 FR 1670502
(43) Date de publication de la demande: 01.08.2018
(73) Titulaire: Zodiac Seats France, 36100 Issoudun (FR)
(72) Inventeur: DHERMAND, Julien, 36100 Neuvy Pailloux (FR)
(74) Mandataire: Marconnet, Sébastien

(56) Documents cités:
- EP-A2- 2 769 916
- WO-A1-92/06003
- FR-A1- 2 445 244
- FR-A1- 3 021 918
- JP-A- 2011 078 557
- US-A- 4 204 657
- US-A1- 2013 229 038
- US-A1- 2014 015 290

## Description

La présente invention porte sur un siège d'aéronef muni d'une zone d'absorption d'énergie intégrée dans le baquet. L'invention trouve une application particulièrement avantageuse, mais non exclusive, avec les sièges d'hélicoptère de type monoplace ou multiplaces. Le siège d'hélicoptère pourra être un siège pilote ou un siège passager.

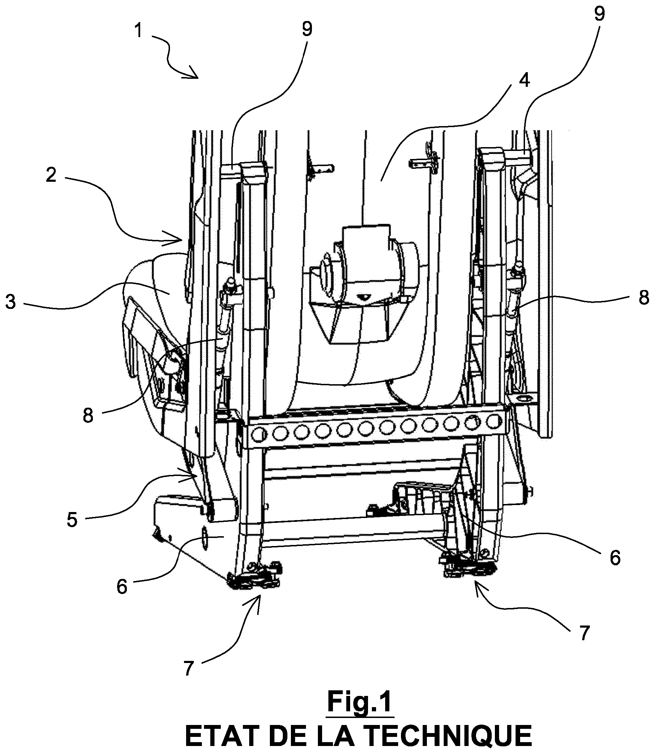

Comme cela est illustré par la figure 1, les sièges d'hélicoptère 1 existants comportent généralement un baquet 2 ayant une paroi formant une assise 3 et un dossier 4. Un dispositif de liaison 5 assure la liaison du baquet 2 à un élément de structure de l'hélicoptère, tel que le plancher ou la cloison. A cet effet, le dispositif de liaison 5 pourra comporter des montants 6 muni d'un système de verrouillage 7 du siège avec l'élément de structure. Un absorbeur d'énergie 8 est généralement interposé entre le dispositif de liaison 5 et les montants 6. Le baquet 2 coulisse le long des montants 6 par l'intermédiaire des axes 9.

Le problème d'une telle architecture est que l'espace disponible sous le siège 1 est très faible. En effet, lors d'un choc vertical, le baquet 2 coulisse vers le bas, de sorte que tout l'espace sous le siège 1 est nécessaire pour la course d'absorption du choc.

En outre, sous l'effort de choc vertical, l'assise 3 s'ouvre (avant déclenchement de l'absorbeur d'énergie 8), ce qui génère un glissement du passager vers l'avant. Ce phénomène, appelé "sous-marinage", engendre un risque de sécurité pour le passager.

Le système d'absorption d'énergie 8 constitue également une fonction dissociée de la fonction d'assise et nécessite donc l'intégration de composants rapportés dédiés à sa fonction.

Le document US2013/0229038 décrit un siège destiné à absorber une énergie lors d'un choc. A cet effet, le siège comprend une assise ayant une partie pliée destinée à se déployer de manière à absorber une partie de l'énergie mécanique à laquelle est soumise le siège lors d'un choc.

L'invention vise à remédier efficacement à ces inconvénients en proposant un siège d'aéronef, notamment d'hélicoptère, selon la revendication 1.

L'invention permet ainsi, par l'intégration de l'absorbeur d'énergie dans le baquet, de réduire le nombre de pièces constituant le siège et donc de réduire la masse de l'ensemble.

L'invention permet en outre d'augmenter l'espace libre sous le siège, permettant ainsi soit de réduire la hauteur du siège sans impacter la sécurité de l'occupant en cas de crash, soit d'augmenter l'espace de rangement.

L'invention permet également de limiter, voire de supprimer, le phénomène de sous-marinage en cas de crash vers le bas lié à la déformation de la zone d'absorption d'énergie.

L'invention permet d'éliminer les effets néfastes des déformations du plancher ou de divers coefficients de frottement introduits par des systèmes de glissière annexes activant l'absorbeur d'énergie.

De plus, l'invention permet de s'adapter au poids de l'occupant et est efficace du 5éme au 95éme percentile sans action préalable de celui-ci.

Selon une réalisation, la zone d'absorption d'énergie est intégrée dans le dossier du baquet.

Selon une réalisation, une deuxième zone d'absorption d'énergie est intégrée dans l'assise de manière à délimiter une zone charnière entre les deux zones d'absorption d'énergie. Cela facilite la déformation du baquet lors du choc et donc augmente la capacité d'absorption du siège.

Selon une réalisation, le baquet comporte un moyen de guidage de la zone d'absorption d'énergie lors de son étirement.

Selon l'invention, une zone de dégagement est prévue sous l'assise pour permettre l'étirement de la zone d'absorption d'énergie lors d'un choc.

Selon une réalisation, la zone d'absorption d'énergie présente une pluralité de trous réalisés dans la paroi du baquet.

Selon une réalisation, la zone d'absorption d'énergie comporte une pluralité de lignes de trous en quinconce, les trous d'une ligne donnée se situant entre deux trous d'une ligne adjacente.

Selon une réalisation, la zone d'absorption d'énergie présente une première partie et une deuxième partie comportant des trous de dimensions différentes.

Selon une réalisation, la zone d'absorption d'énergie comporte des formes en serpentin réalisées dans des bandes verticales.

Selon une réalisation, que la zone d'absorption d'énergie comporte une bande intégrant la répétition d'un motif, notamment de type fractal, suivant lequel des formes de losange trouées centralement sont positionnées aux extrémités transversales de deux losanges ouverts de plus grandes dimensions.

Selon une réalisation, la zone d'absorption d'énergie comporte une pluralité de bandes verticales séparées entre elles par un espace, chaque bande verticale présentant une alternance de portions bombées munies d'un trou et de portions de liaison assurant une liaison entre deux portions bombées successives, les portions bombées d'une bande donnée étant situées entre les portions bombées d'une bande adjacente.

Selon une réalisation, la zone d'absorption d'énergie est formée par une partie du baquet réalisée dans un matériau gaufré. Le matériau gaufré présente, suivant une direction verticale, une alternance de sommets et de creux pour autoriser le déploiement du dossier en cas de crash tout en absorbant de l'énergie étirement de la partie gaufrée.

Selon une réalisation, la zone d'absorption d'énergie comporte au moins deux plis réalisés dans le dossier suivant deux sens opposés, de sorte que des parties du dossier se superposent l'une par rapport à l'autre.

Selon une réalisation, les parties superposées du dossier sont retenues ensemble au moyen d'au moins une couture fusible.

Selon une réalisation, les plis sont réalisés dans un drapage d'un baquet composite.

Selon une réalisation, un témoin visuel est intégré à la zone d'absorption d'énergie pour vérifier son intégrité.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1, déjà décrite, est une vue en perspective partielle de dos d'un siège d'hélicoptère selon l'état de la technique;
- Les figures 2a et 2b sont respectivement des vues en perspective de face et de dos d'un siège d'hélicoptère muni d'une zone d'absorption d'énergie selon la présente invention; Le siège peut être équipé de coussin (mousses et housses) ou d'un habillage uniquement (housse);

- Les figures 3a et 3b sont respectivement des vues en perspective et de côté du siège d'hélicoptère selon l'invention sans l'ensemble de coussins dans le cadre d'une utilisation normale;
- Les figures 4a et 4b sont respectivement des vues en perspective et de côté du siège d'hélicoptère selon l'invention sans l'ensemble de coussins illustrant l'étirement de la zone d'absorption d'énergie suite à un choc vertical;
- Les figures 5a à 5h sont des vues en perspective du baquet illustrant différentes configurations possibles de la zone d'absorption d'énergie intégrée dans le baquet du siège selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les termes relatifs du type "haut" ou "bas" sont entendus par référence à un siège en état d'utilisation installé dans un aéronef posé sur un sol horizontal.

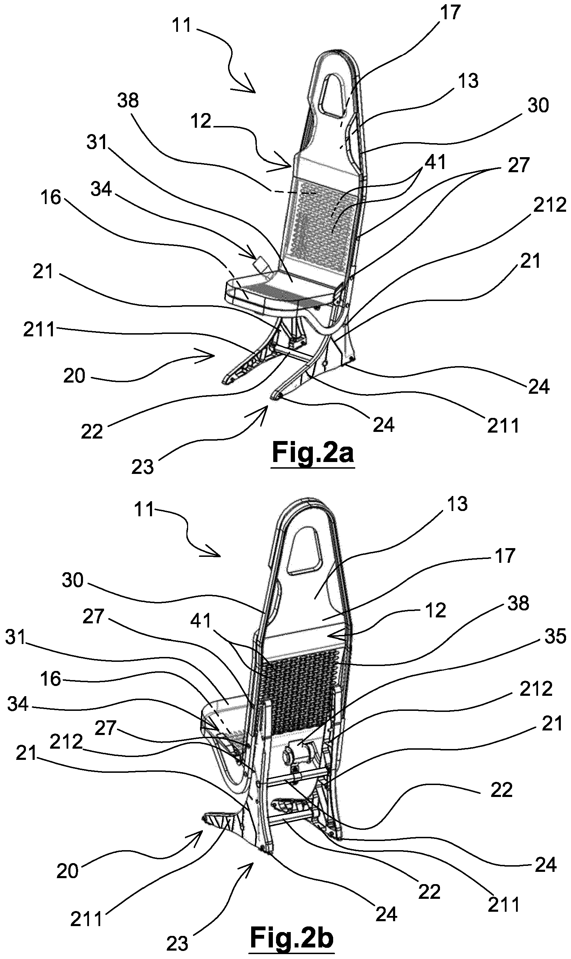

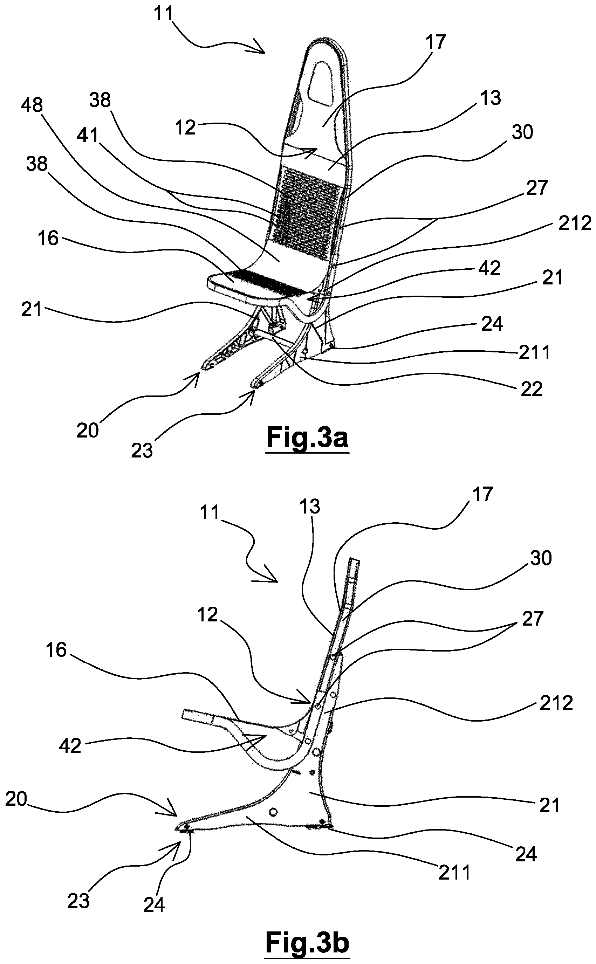

Les figures 2a, 2b, 3a, 3b montrent un siège d'aéronef 11, notamment d'hélicoptère, comportant un baquet 12 ayant une paroi 13 formant une assise 16 et un dossier 17. L'assise 16 vient de matière avec le dossier 17, c'est-à-dire que l'assise 16 est monobloc avec le dossier 17. Les deux parties 16, 17 pourront ainsi être réalisées à partir d'une même paroi 13 moulée ou usinée. Le baquet 12 pourra être réalisé dans un matériau composite ou en tôle, par exemple en acier.

Un dispositif de liaison 20 assure une liaison mécanique entre le baquet 12 et un élément de structure de l'aéronef, tel que le plancher ou une cloison transversale.

Dans l'exemple représenté, le dispositif de liaison 20 comporte deux montants 21 et des traverses 22 assurant une liaison mécanique entre les montants 21. Chaque montant 21, ayant une forme en L, présente une première partie inférieure 211 s'étendant horizontalement et une deuxième partie supérieure 212 s'étendant verticalement.

Un système de verrouillage 23 permet de verrouiller le siège 11 avec l'élément de structure de l'aéronef. Ce système de verrouillage 23 pourra comporter des attaches 24 portées par les parties inférieures 211 pour assurer un serrage des montants 21 sur des rails disposées le long du plancher de l'aéronef.

Par ailleurs, le baquet 12 est fixé sur les montants 21 au moyen d'organes de fixation 27, tels que des boulons, assurant une liaison mécanique entre un cadre support 30 portant le baquet 12 et la face latérale des parties supérieures verticales 212 des montants 21.

Afin d'améliorer le confort du passager, les surfaces externes de l'assise 16 et du dossier 17 pourront être recouvertes d'un ensemble de coussins 31 montré sur les figures 2a et 2b. Pour une configuration du siège 11 de type "pilote", il sera possible d'installer des systèmes de réglage longitudinal et vertical du siège 11 (non représentés).

On prévoit également un système de retenue de l'occupant 34 comportant une ceinture de sécurité munie, dans une configuration dite en Y avec un seul enrouleur 35 ou une configuration en direct (non Y) avec deux enrouleurs séparés, de deux sangles s'étendant autour du corps du passager ou du pilote et de deux sangles enserrant les épaules du passager.

Conformément à l'invention, le dossier 17 du baquet 12 intègre une zone d'absorption d'énergie 38 pour absorber l'énergie dissipée par l'occupant en cas de choc vers le bas. Cette zone d'absorption d'énergie 38 est apte à se déformer par étirement, de manière à autoriser un déplacement relatif de l'assise 16 du baquet 12 par rapport au dossier 17 du baquet 12 lors d'un choc. La zone d'absorption d'énergie 38 pourra être intégrée sur le baquet 12 lors de sa fabrication.

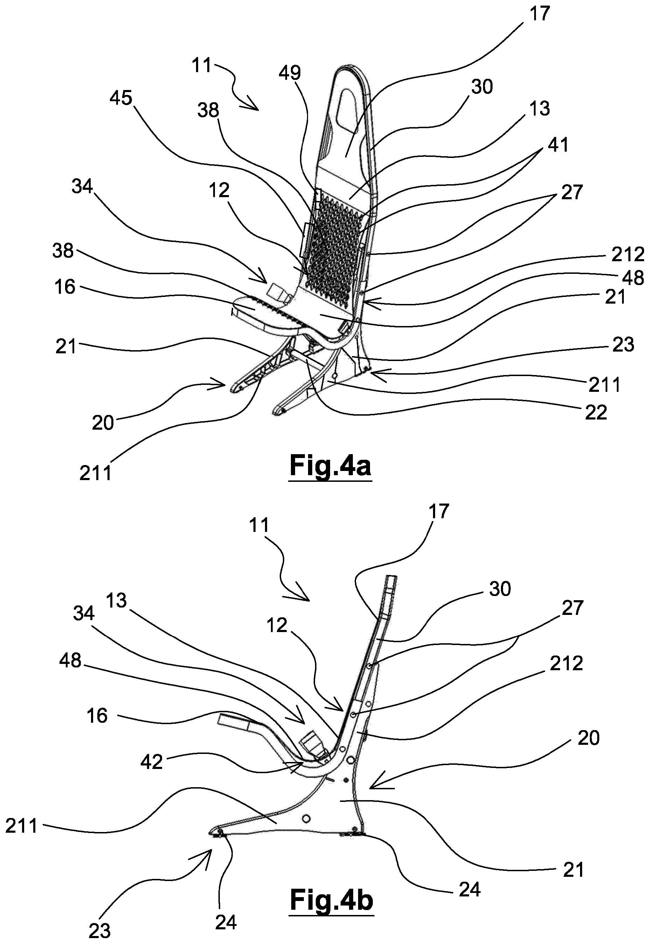

Ainsi, comme cela est visible sur les figures 4a et 4b, lors d'un choc vertical, la partie formant assise 16 se déplace vers le bas suite à l'étirement de la matière dans la zone d'absorption d'énergie 38. Pour obtenir l'étirement local de la paroi 13 du dossier 17, la zone d'absorption d'énergie 38 pourra par exemple comporter une pluralité de trous 41 visant à fragiliser localement la matière du baquet 12, comme cela est décrit plus en détails ci-après.

Une zone de dégagement 42, montrée notamment sur les figures 3b et 4b, est prévue sous l'assise 16 pour permettre l'étirement de la zone d'absorption d'énergie 38 lors d'un choc. La zone de dégagement 42 est constituée par une forme incurvée du cadre support 30 du baquet 12 qui est ouverte en direction de l'assise 16.

En outre, il sera possible de prévoir un moyen de guidage 45 de la zone d'absorption d'énergie 38 lors de son étirement, tel que montré sur la figure 4a. Le moyen de guidage 45 pourra par exemple prendre la forme de rainures dans lesquelles coulissent les bords du dossier 17 lors de l'étirement de la zone d'absorption d'énergie 38.

Avantageusement, une deuxième zone d'absorption d'énergie 38 pourra être intégrée dans l'assise 16 de manière à délimiter une zone charnière 48 entre les deux zones d'absorption d'énergie 38 intégrées respectivement à l'assise 16 et au dossier 17. La zone charnière 48, visible notamment sur les figures 3a et 4a, correspond à la portion de la paroi 13 ayant une forme arrondie pour le raccordement entre l'assise 16 et le dossier 17. Cela facilite la déformation du baquet 12 lors du choc et donc augmente la capacité d'absorption d'énergie du siège 11.

Comme cela est illustré sur la figure 4a, un témoin visuel 49 pourra être intégré à la zone d'absorption d'énergie 38 pour vérifier son intégrité. Le témoin visuel 49 pourra par exemple prendre la forme d'un fusible.

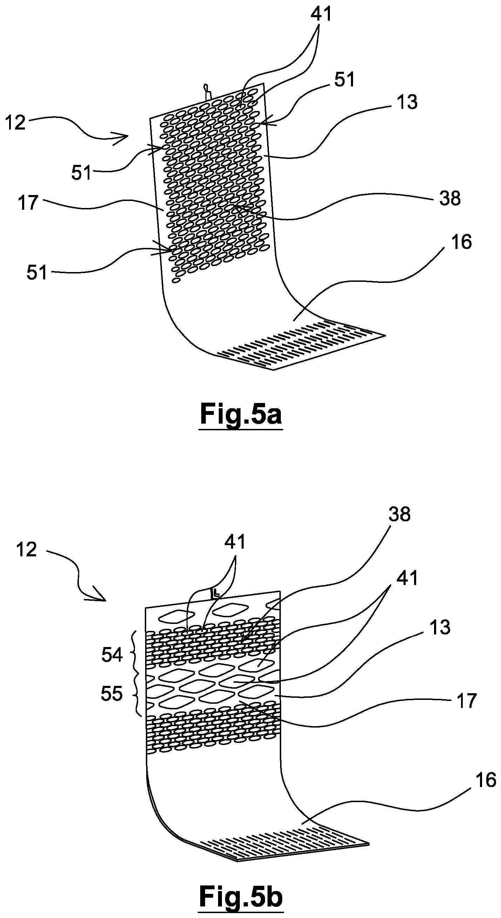

Dans l'exemple de réalisation de la figure 5a, la zone d'absorption d'énergie 38 présente une configuration en treillis suivant laquelle une pluralité de trous 41 sont réalisés côte à côte dans la paroi 13 du baquet 12. La maille du treillis est dimensionnée de telle manière que l'absorbeur d'énergie puisse couvrir un occupant du 5éme percentile femme au 95éme percentile homme.

La zone d'absorption d'énergie 38 pourra ainsi comporter une pluralité de lignes 51 de trous 41 en quinconce, les trous 41 d'une ligne donnée se situant entre deux trous 41 d'une ligne horizontale adjacente. Les trous 41 pourront par exemple prendre une forme en losange.

Dans le mode de réalisation de la figure 5b, la zone d'absorption d'énergie 38 présente une première partie 54 et une deuxième partie 55 en treillis ayant des dimensions différentes de trous 41. Dans l'exemple représenté, les trous 41 de la partie 55 sont plus grands que ceux de la partie 54.

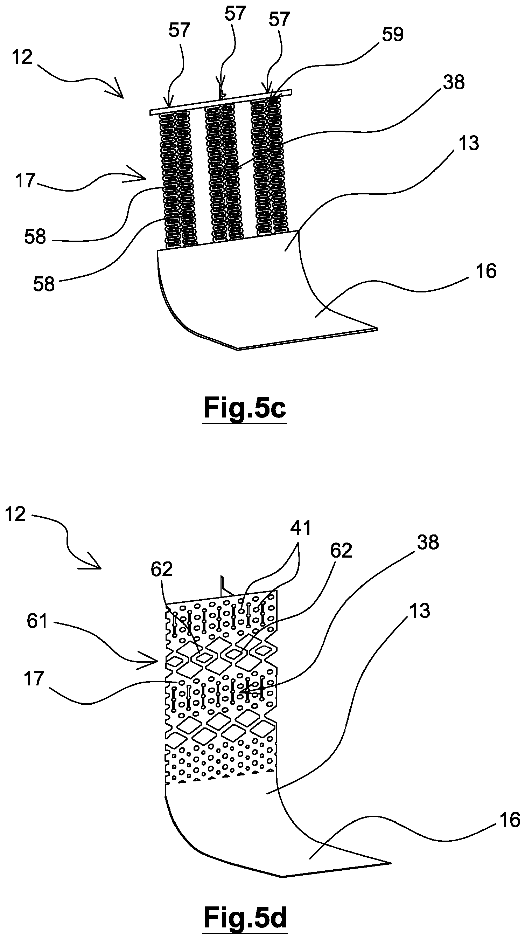

Dans le mode de réalisation de la figure 5c, la zone d'absorption d'énergie 38 comporte des formes en serpentin réalisées dans des bandes verticales 57 espacées entre elles. Les bandes verticales 57, par exemple au nombre de trois, pourront comporter chacune deux parties 58 en forme de serpentin symétriques autour d'une ligne 59 de trous traversants.

Dans le mode de réalisation de la figure 5d, la zone d'absorption d'énergie 38 comporte une bande 61 intégrant la répétition d'un motif, de type fractal, suivant lequel des formes de losange troués centralement 62 sont positionnées aux extrémités transversales de deux losanges ouverts de plus grandes dimensions.

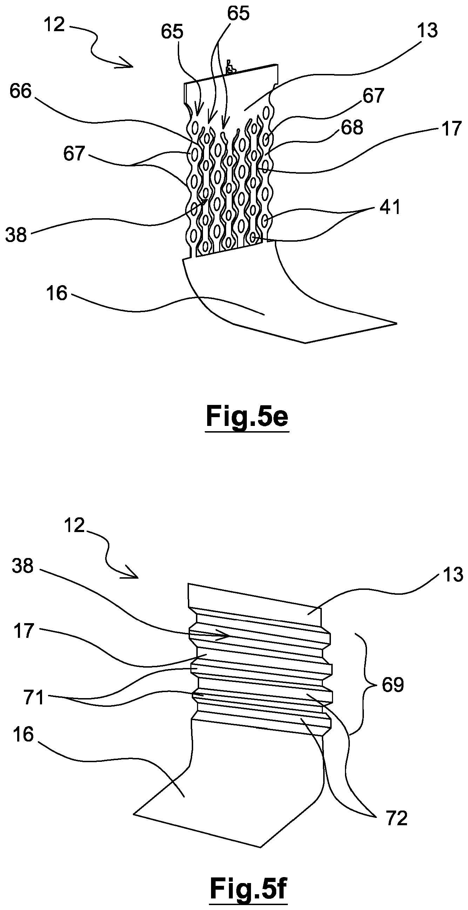

Dans le mode de réalisation de la figure 5e, la zone d'absorption d'énergie 38 comporte une pluralité de bandes verticales 65 séparées entre elles par un espace 66, chaque bande verticale 65 présentant une alternance de portions bombées 67 munies d'un trou 41 et de portions de liaison 68 assurant une liaison entre deux portions bombées 67 successives. Les portions bombées 67 d'une bande 65 donnée sont situées entre les portions bombées 67 d'une bande 65 adjacente. Les portions de liaison 68 suivent la courbure des portions bombées 67 de la bande 65 adjacente. Autrement dit, les bandes 65 présentent des formes complémentaires.

De préférence, une hauteur des bandes 65 décroit lorsque l'on se déplace d'un bord vers le centre du dossier 17. La configuration est sensiblement symétrique par rapport à un plan médian vertical du dossier 17.

Dans le mode de réalisation de la figure 5f, une partie 69 du dossier 17 est réalisée dans un matériau gaufré pour former la zone d'absorption d'énergie 38. Ainsi, le matériau présente, suivant une direction verticale, une alternance de sommets 71 et de creux 72 pour autoriser le déploiement du dossier 17 en cas de crash tout en absorbant de l'énergie étirement de la partie gaufrée 69.

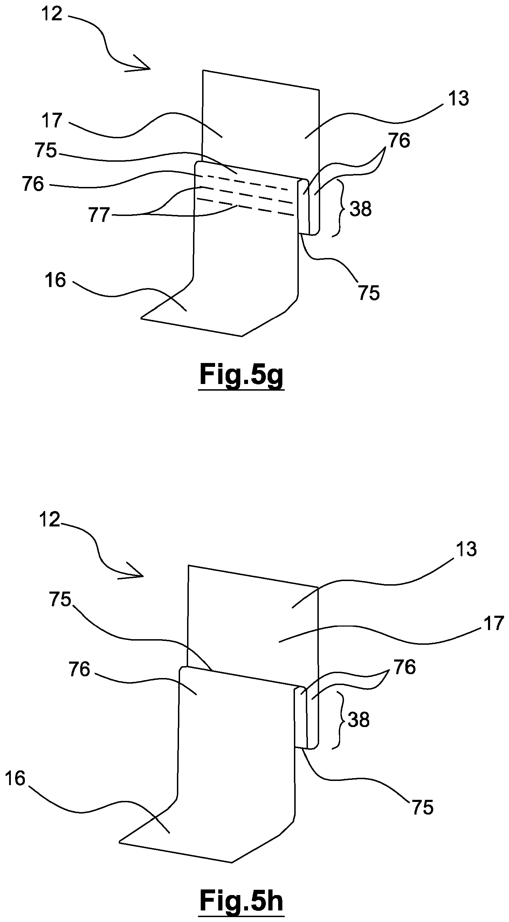

Dans le mode de réalisation de la figure 5g, la zone d'absorption d'énergie 38 comporte au moins deux plis 75 réalisés dans le dossier 17 suivant deux sens opposés, de sorte que des parties 76 du dossier 17 se superposent l'une par rapport à l'autre. Les parties superposées 76 du dossier 17 pourront être retenues ensemble au moyen de coutures fusibles 77. La rupture des coutures 77 permet d'absorber de l'énergie et d'autoriser le déplacement de l'assise 16 par rapport au dossier 17 suite au dépliage du dossier 17.

Dans le mode de réalisation de la figure 5h, les plis 75 sont réalisés dans un drapage d'un baquet 12 réalisé dans un matériau composite. Une zone d'absorption d'énergie 38 est intégrée lors du drapage du baquet 12 composite. Le principe d'absorption consiste à contrôler la délamination entre les deux plis 75 composites en cas de crash vertical.

## Revendications

1. Siège d'aéronef (11), notamment d'hélicoptère, comportant:
- un baquet (12) comportant une paroi (13) formant une assise (16) et un dossier (17),
- un dispositif de liaison (20) apte à assurer une liaison du baquet (12) à un élément de structure de l'aéronef,
- un cadre de support (30) dudit baquet (12) lié audit dispositif de liaison (20),
- ledit baquet (12) intégrant au moins une zone d'absorption d'énergie (38) apte à se déformer par étirement de manière à autoriser un déplacement relatif de l'assise (16) du baquet (12) par rapport au dossier (17) du baquet (12) lors d'un choc,
**caractérisé en ce que** l'assise vient de matière avec le dossier, et **en ce qu'**une zone de dégagement (42) est prévue sous l'assise (16) pour permettre l'étirement de la zone d'absorption d'énergie (38) lors d'un choc, ladite zone de dégagement (42) étant constituée par une forme incurvée dudit cadre de support (30) dudit baquet (12) qui est ouverte en direction de l'assise (16).

2. Siège (11) selon la revendication 1, **caractérisé en ce que** la zone d'absorption d'énergie (38) est intégrée dans le dossier (17) du baquet (12).

3. Siège (11) selon la revendication 2, **caractérisé en ce qu'**une deuxième zone d'absorption d'énergie (38) est intégrée dans l'assise (16) de manière à délimiter une zone charnière (48) entre les deux zones d'absorption d'énergie (38).

4. Siège (11) selon l'une quelconque des revendications 1 à 3, **caractérisé en ce que** le baquet (12) comporte un moyen de guidage (45) de la zone d'absorption d'énergie (38) lors de son étirement.

5. Siège (11) selon l'une quelconque des revendications 1 à 4, **caractérisée en ce que** la zone d'absorption d'énergie (38) présente une pluralité de trous (41) réalisés dans la paroi (13) du baquet (12).

6. Siège (11) selon l'une quelconque des revendications 1 à 5, **caractérisé en ce que** la zone d'absorption d'énergie (38) comporte une pluralité de lignes (51) de trous (41) en quinconce, les trous (41) d'une ligne (51) donnée se situant entre deux trous (41) d'une ligne adjacente.

7. Siège (11) selon l'une quelconque des revendications 1 à 6, **caractérisé en ce que** la zone d'absorption d'énergie (38) présente une première partie (54) et une deuxième partie (55) comportant des trous (41) de dimensions différentes.

8. Siège (11) selon l'une quelconque des revendications 1 à 7, **caractérisé en ce que** la zone d'absorption d'énergie (38) comporte des formes en serpentin réalisées dans des bandes verticales (57).

9. Siège (11) selon l'une quelconque des revendications 1 à 8, **caractérisé en ce que** la zone d'absorption d'énergie (38) comporte une bande (61) intégrant la répétition d'un motif, notamment de type fractal, suivant lequel des formes de losange trouées centralement (62) sont positionnées aux extrémités transversales de deux losanges ouverts de plus grandes dimensions.

10. Siège (11) selon l'une quelconque des revendications 1 à 9, **caractérisé en ce que** la zone d'absorption d'énergie (38) comporte une pluralité de bandes verticales (65) séparées entre elles par un espace (66), chaque bande verticale (65) présentant une alternance de portions bombées (67) munies d'un trou (41) et de portions de liaison (68) assurant une liaison entre deux portions bombées (67) successives, les portions bombées (67) d'une bande (65) donnée étant situées entre les portions bombées (67) d'une bande (65) adjacente.

11. Siège (11) selon l'une quelconque des revendications 1 à 10, **caractérisé en ce que** la zone d'absorption d'énergie (38) est formée par une partie (69) du baquet (12) réalisée dans un matériau gaufré.

12. Siège (11) selon l'une quelconque des revendications 1 à 11, **caractérisé en ce que** la zone d'absorption d'énergie (38) comporte deux plis (75) réalisés dans le dossier (17) suivant deux sens opposés, de sorte que des parties (76) du dossier (17) se superposent l'une par rapport à l'autre.

13. Siège (11) selon la revendication 12, **caractérisé en ce que** les parties superposées (76) du dossier (17) sont retenues ensemble au moyen d'au moins une couture fusible (77).

14. Siège (11) selon la revendication 12 ou 13, **caractérisé en ce que** les plis (75) sont réalisés dans un drapage d'un baquet (12) composite.

15. Siège (11) selon l'une quelconque des revendications 1 à 14, **caractérisé en ce qu'**un témoin visuel (49) est intégré à la zone d'absorption d'énergie (38) pour vérifier son intégrité.

## Patentansprüche

1. Flugzeugsitz (11), insbesondere Hubschraubersitz, umfassend:
- eine Schale (12) mit einer eine Sitzfläche (16) und eine Rückenlehne (17) bildenden Wand (13),
- eine Verbindungsvorrichtung (20) zur Verbindung der Schale (12) mit einem Strukturelement des Flugzeugs,
- einen mit der Verbindungsvorrichtung (20) verbundenen Stützrahmen (30) der Schale (12),
- wobei die Schale (12) mindestens eine Energieabsorptionszone (38) umfasst, die sich verziehen kann, um eine relative Verschiebung der Sitzfläche (16) der Schale (12) relativ zur Rückenlehne (17) der Schale (12) während eines Aufpralls zu ermöglichen,
**dadurch gekennzeichnet, dass** der Sitzfläche stoffförmig mit der Rückenlehne verbunden ist, und dass unter der Sitzfläche (16) ein Freiraum (42) vorgesehen ist, sodass eine Ausziehung de Energieabsorptionszone (38) während eines Aufpralls ermöglichen, wobei der Freiraum (42) von einer gekrümmten Form des Stützrahmens (30) der Schale (12) gebildet ist, wobei die gekrümmte Form zur Sitzfläche (16) hin offen ist.

2. Sitz (11) nach Anspruch 1, **dadurch gekennzeichnet, dass** die Energieabsorptionszone (38) in die Rückenlehne (17) der Schale (12) integriert ist.

3. Sitz (11) nach Anspruch 2, **dadurch gekennzeichnet, dass** eine zweite Energieabsorptionszone (38) in die Sitzfläche (16) integriert ist, um eine Scharnierzone (48) zwischen den beiden Energieabsorptionszonen (38) abzugrenzen.

4. Sitz (11) nach einem der Ansprüche 1 bis 3, **dadurch gekennzeichnet, dass** die Schale (12) zum Führen der Energieabsorptionszone (38) während ihres Ausziehungsvorgangs ein Führungsmittel (45) aufweist.

5. Sitz (11) nach einem der Ansprüche 1 bis 4, **dadurch gekennzeichnet, dass** die Energieabsorptionszone (38) mehrere Löcher (41) in der Wand (13) der Schale (12) aufweist.

6. Sitz (11) nach einem der Ansprüche 1 bis 5, **dadurch gekennzeichnet, dass** die Energieabsorptionszone (38) mehrere gestaffelt Linien (51) von Löchern (41) aufweist, wobei sich die Löcher (41) einer gegebenen Linie (51) zwischen zwei Löchern (41) einer benachbarten Linie befindet.

7. Sitz (11) nach einem der Ansprüche 1 bis 6, **dadurch gekennzeichnet, dass** die Energieabsorptionszone (38) einen ersten Teil (54) und einen zweiten Teil (55) umfasst, welche Löcher (41) unterschiedlicher Abmessungen aufweisen.

8. Sitz (11) nach einem der Ansprüche 1 bis 7, **dadurch gekennzeichnet, dass** die Energieabsorptionszone (38) Serpentinenformen in vertikalen Bändern (57) aufweist.

9. Sitz (11) nach einem der Ansprüche 1 bis 8, **dadurch gekennzeichnet, dass** die Energieabsorptionszone (38) ein Band (61) mit einer Wiederholung eines Musters, insbesondere des fraktalen Typs, aufweist, wobei zentral perforierte Diamantformen (62) entsprechend diesem Muster an den Querenden zweier offener Diamanten größerer Abmessungen positioniert sind.

10. Sitz (11) nach einem der Ansprüche 1 bis 9, **dadurch gekennzeichnet, dass** die Energieabsorptionszone (38) mehrere vertikalen, durch einen Raum (66) voneinander getrennten Bänder (65) aufweist, wobei jedes vertikale Band (65) einen Wechsel von konvexen, jeweils mit einem Loch (41) versehenen Abschnitten (67) und jeweils eine Verbindung zwischen zwei aufeinanderfolgenden konvexen Abschnitten (67) herstellenden Verbindungsabschnitten (68), wobei die konvexen Abschnitte (67) eines gegebenen Bandes (65) zwischen den konvexen Abschnitten (67) eines benachbarten Bandes (65) liegen.

11. Sitz (11) nach einem der Ansprüche 1 bis 10, **dadurch gekennzeichnet, dass** die Energieabsorptionszone (38) von einem aus einem geprägten Material bestehenden Teil (69) der Schale (12) gebildet ist.

12. Sitz (11) nach einem der Ansprüche 1 bis 11, **dadurch gekennzeichnet, dass** die Energieabsorptionszone (38) zwei Falten (75) in der Rückenlehne (17) in zwei entgegengesetzten Richtungen aufweist, so dass Teile (76) der Rückenlehne (17) übereinanderliegen.

13. Sitz (11) nach Anspruch 12, **dadurch gekennzeichnet, dass** die übereinanderliegenden Teile (76) der Rückenlehne (17) mittels mindestens einer Schmelznaht (77) zusammengehalten werden.

14. Sitz (11) nach Anspruch 12 oder 13, **dadurch gekennzeichnet, dass** die Falten (75) in einem Drapieren einer Verbundschale (12) ausgebildet sind.

15. Sitz (11) nach einem der Ansprüche 1 bis 14, **dadurch gekennzeichnet, dass** ein visueller Indikator (49) in die Energieabsorptionszone (38) integriert ist, um deren Integrität zu überprüfen.

## Claims

1. Aircraft seat (11), in particular a helicopter seat, comprising:
- a bucket (12) comprising a wall (13) forming a seating surface (16) and a backrest (17),
- a connecting device (20) for ensuring a connection of the bucket (12) to a structural element of the aircraft,
- a support frame (30) of said bucket (12), wherein said support frame is connected to said connecting device (20),
- wherein said bucket (12) incorporates at least one energy absorption zone (38) that can lose its shape due to stretching process so as to allow a relative displacement of the seating surface (16) of the bucket (12) relative to the backrest (17) of the bucket (12) during an impact,
**characterized in that** the seating surface is integral with the backrest, and **in that** a clearance zone (42) is provided under the seating surface (16) in order to allow the energy absorption zone (38) to be stretched during a shock, wherein said clearance zone (42) is formed by a curved shape of said support frame (30) of said bucket (12), wherein said curved shape is open towards the seating surface (16).

2. The seat (11) according to claim 1, **characterized in that** the energy absorption zone (38) is integrated into the backrest (17) of the bucket (12).

3. The seat (11) according to claim 2, **characterized in that** a second energy absorption zone (38) is integrated into the seating surface (16) so as to delimit a hinge zone (48) between the two energy absorption zones (38).

4. The seat (11) according to any one of the claims 1 to 3, **characterized in that** the bucket (12) comprises a guiding means (45) for the energy absorption zone (38) during the stretching process thereof.

5. The seat (11) according to any one of the claims 1 to 4, **characterized in that** the energy absorption zone (38) comprises a plurality of holes (41) in the wall (13) of the bucket (12).

6. The seat (11) according to any one of the claims 1 to 5, **characterized in that** the energy absorption zone (38) comprises a plurality of staggered lines (51) of holes (41), wherein the holes (41) of a given line (51) are located between two holes (41) of an adjacent line.

7. The seat (11) according to any one of the claims 1 to 6, **characterized in that** the energy absorption zone (38) comprises a first part (54) and a second part (55) comprising holes (41) of different dimensions.

8. The seat (11) according to any one of the claims 1 to 7, **characterized in that** the energy absorption zone (38) comprises serpentine shapes in vertical bands (57).

9. The seat (11) according to any one of the claims 1 to 8, **characterized in that** the energy absorption zone (38) comprises a band (61) incorporating the repetition of a pattern, in particular of the fractal type, according to which centrally perforated diamond shapes (62) are positioned at the transverse ends of two open diamonds of larger dimensions.

10. The seat (11) according to any one of the claims 1 to 9, **characterized in that** the energy absorption zone (38) comprises a plurality of vertical bands (65) separated from each other by a space (66), wherein each vertical band (65) comprises an alternation of convex portions (67) provided with a hole (41) and connecting portions (68) providing a connection between two successive convex portions (67), wherein the convex portions (67) of a given band (65) being situated between the convex portions (67) of an adjacent band (65) .

11. The seat (11) according to any one of the claims 1 to 10, **characterized in that** the energy absorption zone (38) is formed by a part (69) of the bucket (12), wherein said part is made of an embossed material.

12. The seat (11) according to any one of the claims 1 to 11, **characterized in that** the energy absorption zone (38) comprises two folds (75) in the backrest (17) in two opposite directions, so that parts (76) of the backrest (17) are superposed on one another.

13. The seat (11) according to claim 12, **characterized in that** the superposed parts (76) of the backrest (17) are held together by means of at least one fusible seam (77).

14. The seat (11) according to claim 12 or 13, **characterized in that** the folds (75) are formed in a drape of a composite bucket (12).

15. The seat (11) according to any one of the claims 1 to 14, **characterized in that** a visual indicator (49) is integrated into the energy absorption zone (38) in order to check the integrity thereof.
